# FASCICULE DE BREVET EUROPEEN

(11) **EP 0 960 154 B1**
(45) Date de publication et mention de la délivrance du brevet: **15.01.2003**
(21) Numéro de dépôt: 98905488.7
(22) Date de dépôt: 05.02.1998
(51) Int. Cl.: C08J 5/18, C08K 3/00, C08L 101/00, C08L 23/16

(54) **PRODUIT COMPOSITE POREUX NOTAMMENT DE HAUTE SURFACE SPECIFIQUE, PROCEDE DE PREPARATION ET ELECTRODE POUR ENSEMBLE ELECTROCHIMIQUE FORMEE D'UN FILM COMPOSITE POREUX**
PORÖSER VERBUNDWERKSTOFF MIT HOHER SPEZIFISCHER OBERFLÄCHE, VERFAHREN ZUR HERSTELLUNG UND ELEKTRODE FÜR EINE ELEKTROCHEMISCHE TEILANORDNUNG
POROUS COMPOSITE PRODUCT PARTICULARLY WITH HIGH SPECIFIC SURFACE AREA, METHOD FOR PREPARING AND ELECTRODE FOR ELECTROCHEMICAL ASSEMBLY FORMED WITH A POROUS COMPOSITE FILM

(30) Priorité: 06.02.1997 FR 9701350
(43) Date de publication de la demande: 01.12.1999
(73) Titulaire: ELECTRICITE DE FRANCE, 75008 Paris (FR); Bollore, 29000 Quimper (FR)
(72) Inventeur: PENNEAU, Jean-François, F-77210 SAMOREAU (FR); CAPITAINE, François, F-64600 ANGLET (FR); LE GOFF, Philippe, F-77350 Le Mée sur Seine (FR)
(74) Mandataire: Texier, Christian
(86) Numéro de dépôt international: FR9800210
(87) Numéro de publication internationale: WO98034977

(56) Documents cités:
- BE-A- 693 135
- DATABASE WPI Section Ch, Week 8230 Derwent Publications Ltd., London, GB; Class A17, AN 82-62801E XP002065406 & JP 57 100 142 A (MITSUBISHI PETROCHEMICAL CO LTD)
- PATENT ABSTRACTS OF JAPAN vol. 016, no. 178 (E-1196), 28 avril 1992 & JP 04 022062 A (KURARAY CHEM CORP), 27 janvier 1992, cité dans la demande

## Description

L'invention concerne un produit composite poreux, notamment sous forme de film, notamment de haute surface spécifique et un procédé de préparation d'un tel produit.

Elle concerne également le produit composite précurseur utile pour la réalisation dudit procédé.

Elle concerne également l'application du produit composite poreux sous forme de film comme électrode pour l'ensemble de la filière électrochimique, et l'application en général du produit composite poreux, de haute surface spécifique, dans le domaine des membranes sélectives, de l'emballage ou de la catalyse.

On connaît déjà notamment par la demande de brevet EP-A-283 187 des films poreux de basse densité obtenus par filage à température de fusion d'un mélange d'un premier polymère thermoplastique et d'un second polymère thermoplastique puis élimination du second polymère au moyen d'un solvant approprié. Un tel film poreux peut être utilisé pour des applications diverses notamment dans le domaine de la filtration ou de la séparation.

La demande de brevet EP-A-430 439 décrit un procédé pour améliorer la réalisation de tels films, dans lequel un mélange d'un premier polymère thermoplastique et d'un second polymère thermoplastique, non miscible, est extrudé à travers une filière, puis élimination au moyen d'un solvant du polymère non miscible, le procédé étant caractérisé en ce qu'une plaque barrière perforée est interposée en amont de la filière, de façon à obtenir une structure poreuse comprenant une zone longitudinale de faible porosité et une autre zone longitudinale de porosité plus élevée.

On connaît par ailleurs les électrodes polarisables utilisables dans les condensateurs électriques de type double couche, capables d'être chargées avec, ou de décharger, une quantité de charge électrique importante.

Les électrodes polarisables utilisables dans les supercondensateurs sont à base d'un matériau idéalement polarisable, léger et possédant une importante surface d'échange, tel que le charbon actif qui est un matériau carboné à haute surface spécifique, notamment supérieure à 1000 m²/g.

Pour qu'une électrode présente le maximum d'efficacité, elle doit posséder une proportion de masse active maximum et une accessibilité à cette masse optimum. Cette dernière propriété implique qu'elle ait une structure poreuse ouverte. C'est le cas par exemple des électrodes en tissu activé : on fabrique un tissu de charbon actif à partir d'un tissu à base de viscose ou de polyacrylonitrile qui est carbonisé puis activé.

Toutefois, de telles électrodes sont d'un prix élevé et présentent une épaisseur importante et irrégulière (généralement supérieure à 300 µm). De plus, bien qu'une telle réalisation permette, au moins théoriquement, de mettre en oeuvre une technologie de bobinage, il s'avère en pratique qu'une telle mise en oeuvre est délicate.

On peut également obtenir des électrodes dont la proportion de masse active est très élevée (généralement supérieure à 98 %) par frittage. On mélange mécaniquement du charbon actif et différents additifs, notamment du noir conducteur avec un liquide jusqu'à obtention d'une suspension. La solution obtenue est versée sur une paroi filtrante qui est mise sous vide partiel. Après un certain temps, l'ensemble des composants est déposé de façon homogène sur la paroi filtrante, alors que le liquide est passé à travers cette paroi. Le vide partiel crée une certaine cohésion entre les composants, équivalent à un compactage sous pression. L'électrode est le matériau sec récupéré sur la paroi.

Cependant, comme précédemment, cette technologie présente de nombreux inconvénients. Notamment elle se prête difficilement à la mise en oeuvre d'une technologie de bobinage, l'épaisseur, l'homogénéité et la régularité des électrodes sont difficilement contrôlables. De plus, les procédés sont limités dans le choix des polymères. En particulier, les polyoléfines ne peuvent être utilisées.

On peut également mélanger mécaniquement la charge carbonée avec un polymère liant en faible proportion par exemple 3 % de Téflon, jusqu'à obtention d'une pâte très visqueuse, puis lamination pour avoir une feuille que l'on découpe à i'emporte-pièce pour réaliser une électrode.

Ce procédé conduit aux mêmes inconvénients que les réalisations précédentes.

On cite également un procédé de fabrication par enduction dans lequel on mélange la charge active et un ou plusieurs additifs tels qu'un polymère liant, à un solvant jusqu'à l'obtention d'une pâte de viscosité contrôlée. Celle-ci est enduite sur une feuille support qui peut servir par la suite de collecteur de courant. La feuille passe dans un four pour l'évaporation du solvant.

Le dépôt peut être relativement mince (jusqu'à quelques microns) et homogène, et la proportion de masse active est élevée.

Il s'agit néanmoins d'un procédé difficile à mettre en oeuvre à cause de l'utilisation éventuelle de solvants qui peuvent être toxiques.

On connait aussi les électrodes sous forme de films, notamment des films de polyoléfines permettant de mettre en oeuvre une technologie de bobinage.

Ces électrodes polarisables sont à base d'un matériau carboné, par exemple un charbon actif à haute surface spécifique, notamment à 1000 m²/g et d'un liant tel que les polyoléfines, notamment le polyéthylène, le polypropylène ou d'autres polymères tels que les polyesters, les polycarbonates, les polyimides.

On a par exemple proposé des électrodes polarisables utilisant un liant de polyéthylène ou de polypropylène et une poudre de charbon actif (JP-A-22062/92).

Cependant, les électrodes polarisables à base d'un liant tel que le polyéthylène ou le polypropylène présentent une très faible porosité.

De tels phénomènes se produisent également avec les autres liants cités ci-dessus.

Le document BE-A-693 135 décrit des feuilles de polytétrafluoroéthylène poreuses et entièrement à l'état de fibrilles contenant, jusqu'à 98 % du poids de la feuille, des matières de charge conductrices comme le graphite ou un métal.

Ce type de structure est obtenu par mélange d'une dispersion aqueuse de particules de polytétrafluoroéthylène avec un polymère extractible, suivi d'un broyage. Ce broyage constitue une étape critique qui conduit au cisaillement des particules de polytétrafluoroéthylène et la transformation des particules en réseau de fibres allongées. Puis on procède à l'extrusion puis à l'élimination du polymère extractible. La structure finale présente des pores supérieures à 0,1 µm. Ces feuilles peuvent être utilisées comme électrode dans des cellules à combustibles.

L'abrégé du document japonais JP-A-57100142 décrit la production d'une membrane poreuse consistant à extruder un mélange en volume de 15-60 % d'une résine polyoléfinique ; 3-40 % d'une polyéther ; 20 à 80 % en volume d'une poudre finement divisée extractible ; 0,5 à 10 % d'une poudre insoluble puis à extraire le polyéther et la poudre extractible. Le déposant a vérifié qu'il n'était pas possible par le procédé décrit dans ce document d'obtenir des feuilles contenant une proportion supérieure de charge sans affecter gravement les propriétés mécaniques.

Il serait donc souhaitable de réaliser des électrodes poreuses formées d'un liant et de charges, notamment à haute surface spécifique pouvant être produites en grande quantité permettant de mettre en oeuvre une technologie de bobinage.

Le but de la présente invention est précisément de proposer une solution à ce problème technique.

Un objet de la présente invention, est de proposer de nouveaux produits composites poreux ayant notamment une haute surface spécifique.

Un autre objet de la présente invention est de proposer des films composites notamment de haute surface spécifique, fortement chargés permettant de mettre en oeuvre une technologie de bobinage.

Un autre objet de la présente invention est de permettre d'utiliser un choix de polymères étendu.

Un autre objet de la présente invention est de proposer des produits ou films composites poreux de faible coût de fabrication.

Un autre objet de la présente invention est de permettre d'obtenir des produits de forme variée du fait de la technique d'extrusion utilisée pouvant être mise en oeuvre, tels que tubes, joncs, films ou tout autre objet extrudé.

Un autre objet de la présente invention est de proposer des électrodes carbonées sous forme de films poreux idéalement polarisables de faible épaisseur, homogène, et qui présentent une proportion de masse active très élevée.

Un autre objet de la présente invention concerne les applications des produits composites poreux comme membrane sélective, films. d'emballage, films isolants.

En premier lieu l'invention concerne un produit composite poreux tel que défini à la revendication 1.

Par l'expression "produit", on entend un ensemble dont la cohésion est suffisante pour qu'il conserve son intégrité sans qu'il soit supporté.

Il est remarquable de noter que les produits selon l'invention présentent une structure originale du fait de la très grande homogénéité de la répartition de la charge, notamment de haute surface spécifique dans le matériau polymérique et de sa structure continue. Le matériau polymérique est, par ailleurs, non fibrillé.

Il s'agit d'une des caractéristiques essentielles du produit selon. l'invention car le déposant a noté qu'un produit qui ne présentait pas une i homogénéité suffisante conduisait à des propriétés mécaniques insuffisantes pour le taux de charges sus-indiquées.

L'expression "susceptible d'être obtenu par extrusion" signifie que le produit composite présente les caractéristiques d'un produit extrudé.

Afin que le produit « susceptible d'être obtenu par extrusion » présente l'homogénéité requise, il est nécessaire que celle-ci soit effectuée à partir d'un mélange le plus homogène possible. Un tel mélange homogène peut être obtenu à partir d'une extrudeuse bivis. D'autres mélangeurs appropriés peuvent également être utilisés.

Il s'agit donc de produits fondamentalement différents de ceux qui peuvent être obtenus par la technique d'enduction telle qu'elle a été décrite dans le préambule de la description.

De préférence, une des caractéristiques essentielles du produit composite poreux selon l'invention est qu'il présente une surface spécifique élevée.

La surface spécifique est évaluée par la mesure "BET" telle que décrite par exemple dans la publication Technique de l'ingénieur Pbis 45-1 (Etude de structure - mesure de surface spécifique) Jean Charpin et Bernard Rasneur

La surface spécifique du produit composite poreux selon l'invention est supérieure à environ 10 m²/g et de préférence supérieure à 20 m²/g. Avantageusement, compris entre 20 m²/g et 100 m²/g.

La porosité du produit est en volume supérieure à 5 %. Elle est généralement inférieure à environ 80 %.

Pour les applications dans les supercondensateurs ou accumulateurs, la porosité est généralement comprise entre 15 et 50%.

Ce diamètre moyen des pores est généralement inférieur à 1 µm. Selon une variante préférée, le diamètre moyen des pores est inférieur à 0,5 µm, de préférence inférieur à 0,1 µm, avantageusement inférieur à 0,02 µm.

Dans le cas particulier des polyoléfines fluorées, le diamètre des pores est généralement inférieur à 0,5 µm. C'est le cas notamment du polytétrafluoroéthylène.

Outre la surface spécifique BET élevée et les propriétés mécaniques, ces produits sont remarquables par le fait que la capacité électrochimique est supérieure à 2 F/g, de préférence supérieure à 10 F/g.

Dans le cas d'une électrode pour supercapacité, la porosité désirée est mésoporeuse, alors que dans le cas du brevet belge 693135 qui concerne une électrode pour application « pile à combustible », la porosité désirée doit être ouverte (macroporeuse) pour permettre un flux de combustible important.

Dans le cas des produits composites poreux sous forme de films, on notera que ces films présentent des propriétés mécaniques remarquables qui permettent de les mettre en oeuvre par la technologie du bobinage. En général, ces films présentent une résistance à la traction à la rupture supérieure à 4 MPa, avantageusement supérieure à 6 MPa à température ambiante.

Parmi les charges, on peut citer les carbones tels que les graphites, les noirs de carbone de faible surface spécifique, les oxydes de métaux, la silice, les talcs.

Parmi les charges de haute surface spécifique convenant pour la réalisation de tels produits composites, on cite notamment les matériaux carbonés, les particules minérales et métalliques de haute surface spécifique telles que par exemple les métaux de Raney, les oxydes de terres rares, les céramiques poreuses, les perlites, zéolites, argiles.

Les propriétés requises pour un matériau carboné sont une surface développée par unité de poids élevé, une faible résistance électrique, une bonne stabilité électrochimique.

Les matériaux carbonés peuvent se présenter sous forme de poudres et sont obtenus par exemple à partir de brai de pétrole, de résines phénoliques, de coquilles de noix de coco et d'autres produits organiques.

Un charbon actif présente notamment une surface spécifique (BET) comprise entre 300 et 3000 m²/g, de préférence supérieure à 1000 m²/g.

Le matériau polymérique est formé d'élastomères ou de polymères thermoplastiques qui sont insolubles dans les solvants aqueux et/ou organiques et qui assurent la cohésion du produit (polymères ou élastomères de structure) et de polymères ou élastomères thermoplastiques à groupements polaires qui subsistent dans le produit après la mise en oeuvre du procédé de fabrication qui conduit audit produit ou film poreux.

Parmi les élastomères ou polymères insolubles, on cite notamment les polyoléfines telles que les polypropylènes, les polyéthylènes, les copolymères d'éthylène et de propylène. Ces polyoléfines sont telles qu'elles peuvent être produites sous forme de films et sont bien connues notamment en tant que films d'emballage. Il s'agit par exemple de polyéthylène de basse ou haute densité comprenant éventuellement à titre de copolymère une proportion plus ou moins importante d'une alpha-oléfine.

Il peut s'agir également de polyamides tels que les polyéthers bloc polyamide, de polyimides, de copolymères vinyliques à forte proportion de monomères d'éthylène tels que le polyéthylène vinylacétate à forte proportion de monomères d'éthylène, des polymères acryliques, les polymères aromatiques comme les polystyrènes tels que le copolymère polystyrène-butadiène, des polymères fluorés tels que le polyfluorure de vinylidène, des copolymères formés à partir des monomères appartenant à l'une des familles citées ci-dessus, par exemple les copolymères de fluorure de vinylidène et d'hexafluoropropylène, les copolymères de fluorure de vinylidène et de trifluoroéthylène.

De préférence, les élastomères ou polymères thermoplastiques insolubles dans les solvants sont choisis dans le groupe des polyoléfines.

Parmi les polymères solubles, on cite notamment les polymères qui sont solubles dans les solvants suivants : l'eau, les alcools, le diméthylformamide, le diméthylsulfoxyde, le tétrahydrofuranne, l'acétone.

Sous réserve bien entendu que le degré de polymérisation soit approprié à une élimination par solvant, les polymères solubles sont notamment choisis parmi les polyéthers tels que le polyoxyéthylène, le polyoxypropylène, les polyalcools tels que l'alcool polyvinylique, les copolymères éthylène alcool vinylique. Parmi ces polymères, on cite notamment ceux dont la masse moléculaire est comprise entre 200 000 et 1 000 000, avantageusement les polyéthers.

On cite également les polymères qui peuvent être calcinés selon les méthodes habituelles.

Les polymères calcinables correspondent aux polymères solubles dans les solvants cités ci-dessus et peuvent être encore choisis parmi les polymères dont la température de décomposition est inférieure à celle du polymère ou élastomère de structure, par exemple la cellulose.

Le choix de ces polymères peut être effectué de manière connue par des tests simples à la portée de l'homme du métier.

De préférence, le produit composite comprend au moins 20 % en poids de charges, avantageusement entre 30 et 90 %, de préférence entre 50 et 85 %.

De préférence, le produit composite comprend 10 à 40% de polymères ou élastomères thermoplastiques, non solubles dans les solvants aqueux et/ou organiques et 5 à 40% de polymères solubles dans les solvants aqueux et/ou organiques.

De préférence encore, le produit composite comprend :
- 10 à 40% de polyoléfine
- 5 à 40% de polyéther,
- charges q.s.p. 100%.

Une autre caractéristique du produit composite poreux selon l'invention réside dans le fait qu'il se présente sous une forme homogène et régulière, c'est-à-dire que les charges sont intimement mélangées au matériau polymérique, à la différence par exemple des feuilles obtenues par enduction d'un mélange de charges carbonées avec une faible proportion de polymère liant du type polytétrafluoroéthylène.

Les produits composites selon l'invention peuvent se présenter sous la forme d'un film et présentent l'avantage de pouvoir être mis en oeuvre selon la technologie du bobinage.

Ces films évitent l'utilisation d'un support.

L'invention concerne également un procédé de préparation d'un produit composite tel que décrit précédemment, caractérisé en ce que :
a) on forme un mélange comprenant un ou plusieurs polymères insolubles, un ou plusieurs polymères solubles ou calcinables, une ou plusieurs charges à haute surface spécifique,
b) on extrude ledit mélange de façon à former un produit précurseur extrudé,
c) on élimine le ou les polymères solubles ou calcinables du produit précurseur extrudé,
d) on récupère le produit composite poreux.

Ledit procédé est donc un procédé d'extrusion-élimination permettant d'obtenir un produit composite poreux de haute surface spécifique.

Par l'expression "élimine" on entend qu'une partie substantielle des polymères solubles ou calcinables est évacuée pour former des pores, étant entendu qu'il est peu probable d'éliminer totalement ces polymères du fait notamment de leur affinité pour le charbon actif.

Dans la phase a) du procédé, on mélange de façon homogène que ce soit par mise en solution ou suspension, l'ensemble des constituants, à savoir un ou plusieurs polymères insolubles en solvant et qui correspondent au matériau polymérique formant la structure du produit composite, un autre polymère ou d'autres polymères solubles en solvant ou calcinables et une ou plusieurs charges à haute surface spécifique sachant que les polymères assurant la cohésion du produit composite (polymères insolubles) ainsi que les charges à haute surface spécifique ne sont pas éliminés lors de l'étape c). Le mélange peut également être réalisé au moyen de l'extrudeuse permettant de mettre en oeuvre l'étape b).

Parmi les polymères solubles qui seront éliminés lors de l'étape c), on peut choisir tous les polymères solubles qui peuvent être mélangés selon l'étape a), et l'on cite notamment les polymères qui sont solubles par exemple dans l'eau, les alcools, le diméthylformamide, le diméthylsulfoxyde, le tétrahydrofuranne, l'acétone.

Sous réserve bien entendu que le degré de polymérisation soit approprié à une élimination par solvant, les polymères solubles sont notamment choisis parmi les polyéthers tels que le polyoxyéthylène, le polyoxypropylène, les polyalcools tels que l'alcool polyvinylique, les copolymères éthylène alcool vinylique.

En tant que polymères qui peuvent être éliminés pour former des pores, on cite également les polymères qui peuvent être calcinés selon les méthodes habituelles.

Les polymères calcinables peuvent être choisis parmi les polymères dont la température de décomposition est inférieure à celle du polymère ou élastomère de structure, par exemple la cellulose.

Le choix de ces polymères peut être effectué de manière connue par des tests simples à la portée de l'homme du métier.

Le mélange des différents constituants du produit est effectué à température appropriée, notamment au moyen d'une extrudeuse. Dans ce cas, les étapes a) et b) sont effectuées simultanément pour donner un produit intermédiaire précurseur présentant une très faible surface spécifique BET (inférieure à 1 m²/g environ).

Le produit précurseur peut être extrudé à nouveau sous la forme d'un film, notamment un film mince dont l'épaisseur est inférieure à environ 300 µm.

Selon une variante avantageuse, l'étape b) est donc effectuée en deux étapes :
- une première étape d'extrusion (i) consistant à former des granulés,
- une seconde étape d'extrusion (ii) consistant à former un film.

La première étape est avantageusement effectuée dans une extrudeuse bivis co-rotative, avec une filière à joncs par exemple, alors que la seconde étape est avantageusement effectuée dans une extrudeuse monovis avec une filière plate.

Le produit précurseur extrudé, soit sous forme de granulés, soit sous forme de films est ensuite soumis à l'étape c) d'élimination permettant d'évacuer le polymère soluble.

Cette étape d'élimination peut être effectuée notamment par solubilisation du polymère soluble par mise en contact de celui-ci avec un solvant approprié.

On peut également effectuer une calcination selon un procédé connu qui consiste à monter lentement la température jusqu'à la température de dégradation du polymère à éliminer.

Les produits sont ensuite récupérés et présentent une surface spécifique "BET" supérieure à environ 10 m²/g, de préférence supérieure à environ 20 m²/g.

L'invention a donc également pour objet les produits composites poreux de haute surface spécifique formés d'un matériau polymérique et d'une ou plusieurs charges de haute surface spécifique, caractérisés en ce qu'ils sont susceptibles d'être obtenus par le procédé d'extrusion-élimination tel que décrit ci-dessus.

La présente invention a également pour objet les produits précurseurs obtenus avant l'étape d'élimination, ces produits précurseurs utiles notamment pour la réalisation du procédé décrit ci-dessus comprennent un ou plusieurs polymères insolubles en solvant, un autre ou d'autres polymères solubles en solvant ou calcinables et une ou plusieurs charges à haute surface spécifique.

De préférence, le rapport en poids polymères insolubles/polymères solubles ou calcinables est compris entre 0,1 et 5, avantageusement 0,1 et 2.

De préférence, la proportion de charges à haute surface spécifique dans le mélange hors solvant conduisant au produit précurseur est compris entre 20 et 60 % en poids.

L'invention est également relative à une électrode sous forme de film formée d'un produit composite poreux de haute surface spécifique selon l'invention.

En général, ces électrodes sous forme de films poreux peuvent être utilisées pour la réalisation d'ensembles électrochimiques tels que des accumulateurs, des condensateurs double couche ou supercondensateurs.

Les supercondensateurs sont formés de manière connue de deux électrodes polarisables et d'un séparateur imprégné par un électrolyte. On désigne ces ensembles également par le terme de condensateur double couche électrolytique.

Les électrodes selon l'invention améliorent de façon considérable la capacité des films notamment par la proportion très élevée de masse active qui peut être obtenue.

On cite notamment les domaines d'applications suivants :
- Electrodes poreuses pour le stockage électrochimique de l'énergie [générateurs électrochimiques, accumulateurs rédox, accumulateurs à air, condensateurs double couche ou supercondensateurs électrochimiques, piles à combustible].
- Electrodes poreuses pour les procédés d'électrodialyse [production d'eau potable, production de sel à partir d'eau de mer, déminéralisation des produits organiques (lactosérums, lait, vin ...), dessalement des eaux de consommation, adoucissement des eaux de chaudière, décontamination des effluents de centrales nucléaires].
- Electrodes poreuses pour les procédés de déionisation capacitive [production d'eau potable, production de sel à partir d'eau de mer, déminéralisation des produits organiques (lactosérums, lait, vin,...), dessalement des eaux de consommation, adoucissement des eaux de chaudière, décontamination des effluents de centrales nucléaires}.
- Electrodes poreuses pour les procédés d'électrolyse [production de chlore et de soude, électrolyse de l'eau, production d'acide et de base à partir d'un sel].
- Electro-membranes pour les procédés de dialyse et d'électrodialyse [production d'eau potable, production de sel à partir d'eau de mer, déminéralisation des produits organiques (lactosérums, lait, vin,...), dessalement des eaux de consommation, adoucissement des eaux de chaudière, décontamination des effluents de centrales nucléaires].
- Electro-membranes pour les procédés de filtration [électrofiltration sélective des produits organiques, microfiltration].

L'invention concerne également l'application de ces produits composites sous forme de granulés ou de films :
- aux méthodes de filtration et d'adsorption par exemple, déhumidification d'ambiances gazeuses ou liquides, l'adsorption sélective (physique et/ou chimique), tamis moléculaires, filtration d'air pollué,
- à la catalyse,
- aux échanges d'énergie (par exemple l'isolation thermique ou phonique, les échangeurs thermiques),
- à l'emballage, notamment l'emballage de produits fragiles nécessitant une perméabilité sélective.

L'invention est maintenant illustrée par les exemples suivants donnés à titre indicatif :

### Exemple 1 :

Les proportions massiques des composés (poudres) de départ sont les suivantes :
- charbon actif 40% (de surface spécifique 1250 m²/g)
- copolymère éthylène propylène 20%
- polyoxyéthylène 40% (POE 300 000).

L'ensemble des constituants en poudre est mélangé de façon la plus homogène possible, par mélange au moyen d'une extrudeuse bivis co-rotative de longueur 40D, avec deux zones de malaxage et trois zones de transport. La machine utilisée est une bivis de diamètre 58 mm, et le profil de température utilisé est le suivant :
50/120/120/110/110/100/100/120/120/150/170.
Pression filière : 8 MPa
Nombre de tours par minute : 85
Débit : 34 kg/h.

Les granulés obtenus sont introduits dans une monovis de longueur 30D pour l'extrusion d'un primaire. La machine utilisée est une bivis de diamètre 30 mm et le profil de température utilisé est le suivant :
165/170/170/170/185°C.
Pression filière : 8 MPa
Nombre de tours par minute : 10
Débit : 2 kg/h.

Le film obtenu a une épaisseur de 200 µm.

L'étape suivante consiste à plonger le film obtenu dans de l'eau à température ambiante pendant un temps de séjour de 5 minutes. Le film est alors séché à 40°C pendant 1 heure.

Les proportions massiques moyennes des composés après traitement sont les suivantes :
- charbon actif 52%
- copolymère éthylène propylène 26%
- polyoxyéthylène 22%.

II est possible de métalliser à l'aluminium (par exemple: 0,5 Ω/□ les films obtenus avant ou après traitement, dans une machine à métalliser, à une pression de l'ordre de 0,01Pa (10-4 mbar).

La caractérisation physique des films obtenus, métallisés ou non, conduit aux données suivantes:
- élongation à la rupture (voir tableau ci-après)
- tension de bobinage (noyau de 6 mm de diamètre) : 0.05 g/µm/mm.
- capacité électrochimique de 26 F/g d'électrode (mesurée via la pente de la courbe de décharge du supercondensateur, en mode intensiostatique.)
- surface spécifique "BET" inférieure à 1 m²/g de film à la sortie de l'extrusion, et surface spécifique "BET" de 28 m²/g de film après passage dans l'eau selon la méthode qui consiste à immerger l'électrode pendant cinq minutes environ.

### Exemple 2

Les proportions massiques des composés (poudres) de départ sont les suivantes :
- charbon actif 40% (de surface spécifique 1250 m²/g)
- copolymère éthylène propylène 10%
- polyoxyéthylène 50% (POE 300 000).

L'ensemble des constituants en poudre est mélangé de façon la plus homogène possible par mélange au moyen d'une extrudeuse bivis co-rotative de longueur 25D, avec deux zones de malaxage et trois zones de transport. La machine utilisée est une bivis de diamètre 19 mm et le profil de température utilisé est le suivant : 160/170/180/190/200 °C
Pression filière : 10,5 MPa
Nombre de tours par minute : 400
Débit: 1.8 kg/h.

Les granulés obtenus sont introduits dans une monovis de longueur 30D pour une extrusion d'un primaire. La machine utilisée est une bivis de diamètre 30 mm et le profil de température utilisé est le suivant :
160/170/180/190/220°C.
Pression filière : 17,5 MPa
Nombre de tours par minute : 15
Débit : 2.5 kg/h. Le film obtenu a une épaisseur de 180 µm.

L'étape suivante consiste à plonger le film obtenu dans de l'eau à température ambiante pendant un temps de séjour de 5 minutes. Le film est alors séché à 40°C pendant 1 heure.

Les proportions massiques moyennes des composés après traitement sont les suivantes :
- charbon actif 60%
- copolymère éthylène propylène 15%
- polyoxyéthylène 25%

Il est alors possible de métalliser à l'aluminium (par exemple : 0,5 Ω/□les films obtenus dans une machine à métalliser, à une pression de l'ordre de 0,01 Pa (10-⁴mbar).

La caractérisation physique des films obtenus, métallisés ou non, conduit aux données suivantes :
- élongation à la rupture (voir tableau ci-après)
- tension de bobinage (noyau de 6 mm de diamètre) :0.05g /µm/mm.
- capacité électrochimique de 26 F/g d'électrode selon la méthode décrite à l'exemple 1.
- surface spécifique "BET" inférieure à 1 m²/g de film à la sortie de l'extrusion, et surface spécifique "BET" de 60 m²/g de film après passage dans l'eau selon la méthode décrite à l'exemple 1.

### Mesure de caractérisation mécanique des films obtenus

| Température | Film | Allongement à la rupture (%) | Module d'élasticité (Dn/mm²) | Force (Mpa) |
|---|---|---|---|---|
| 20°C | exemple 1 | 0.97 | 134 | 8.3 |
| 20°C | exemple 2 | 0.89 | 170 | 9.3 |
| 40°C | exemple 1 | 1.14 | 88 | 6.1 |
| 40°C | exemple 2 | 1.20 | 125 | 7.2 |
| 60°C | exemple 1 | 5.73 | 22 | 2.0 |
| 60°C | exemple 2 | 1.68 | 30 | 2.6 |

### Exemple 3

Les proportions massiques des composés (poudres) de départ sont les suivantes :
- charbon actif 40% (charbon actif de surface spécifique 1250 m²/g)
- copolymère éthylène propylène 20%
- polyoxyéthylène 40% (POE 300 000).

L'ensemble des constituants en poudre est mélangé de façon la plus homogène possible par mélange au moyen d'une extrudeuse bivis co-rotative de longueur 40D, avec deux zones de malaxage et trois zones de transport. La machine utilisée est une bivis de diamètre 58 mm et le profil de température utilisé est le suivant :
50/120/120/110/110/100/100/120/120/150/170.
Pression filière : 8 MPa
Nombre de tours par minute : 85
Débit : 34 kg/h.

L'étape suivante consiste à plonger les granulés obtenus (2 mm/² mm) dans de l'eau à température ambiante pendant un temps de séjour de 5 minutes. Le film est alors séché à 40°C pendant 1 heure.

Les proportions massiques moyennes des composés après traitement sont les suivantes :
- charbon actif 60%
- copolymère éthylène propylène 15%
- polyoxyéthylène 25%.

Les granulés obtenus présentent une surface développée de 30 m²/g.

## Revendications

1. Produit composite poreux de structure homogène, **caractérisé en ce qu'**il est formé d'un matériau polymérique et au moins 20% d'une ou plusieurs charges, et **en ce que** ledit produit est susceptible d'être obtenu par extrusion.

2. Produit composite poreux selon la revendication 1, **caractérisé en ce qu'**il présente une surface spécifique élevée.

3. Produit composite selon la revendication 1 ou 2, **caractérisé en ce que** le diamètre moyen des pores est inférieur à 0,5 µm.

4. Produit composite selon la revendication 1, **caractérisé en ce que** le matériau polymérique comprend les élastomères ou polymères choisis dans le groupe constitué par les polyoléfines, éventuellement fluorées, les polymères acryliques, les polymères aromatiques, les polyamides, les polyimides, les polymères vinyliques à forte proportion de monomères d'éthylène et éventuellement des polymères ou élastomères thermoplastiques solubles dans les solvants polaires organiques ou l'eau qui subsistent après la mise en oeuvre du procédé de fabrication.

5. Produit composite selon la revendication 4, **caractérisé en ce que** le matériau polymérique comprend les élastomères ou polymères choisis dans le groupe constitué par les polyéthylènes, les polypropylènes, les copolymères éthylène-α-oléfine et éventuellement des polymères ou élastomères thermoplastiques solubles dans les solvants polaires organiques ou l'eau qui subsistent après la mise en oeuvre du procédé de fabrication

6. Produit composite selon l'une des revendications 4 ou 5, **caractérisé en ce que** les élastomères thermoplastiques solubles dans les solvants polaires organiques ou l'eau qui subsistent après la mise en oeuvre du procédé de fabrication sont choisis parmi les polyéthers, les alcools polyvinylique, les copolyméres éthylène alcool vinylique, de préférence les polyéthers de masse moléculaire comprise entre 200 000 et 1 000 000.

7. Produit composite selon la revendication 6, **caractérisé en ce que** le produit composite comprend :
- 10 à 40% de polyoléfine,
- 5 à 40% de polyéther,
- charges q.s.p. 100%.

8. Produit composite selon la revendication 1, **caractérisé en ce que** la charge est choisie parmi les charges de haute surface spécifique, notamment constitué par le charbon actif, les particules minérales, les particules métalliques.

9. Produit composite selon la revendication 8, **caractérisé en ce que** la charge présente une surface spécifique comprise entre 300 et 3000 m²/g.

10. Produit composite selon l'une des revendications précédentes, **caractérisé en ce qu'**il comprend entre 30 % et 90% en poids de charge.

11. Produit composite selon la revendication 10, **caractérisé en ce qu'**il comprend 50 à 85 % en poids de charge.

12. Produit composite selon l'une des revendications précédentes, **caractérisé en ce qu'**il présente une surface spécifique "BET"' supérieure à 10 m2/g, de préférence supérieure à 20 m²/g.

13. Produit composite selon l'une des revendications précédentes, **caractérisé en ce qu'**il se présente sous la forme d'un film.

14. Produit composite selon la revendication 13, **caractérisé en ce que** le produit sous forme de film présente une résistance à la traction à la rupture supérieure à 4 Mpa, de préférence supérieure à 6 MPa.

15. Produit composite selon l'une des revendications 1 à 12, **caractérisé en ce qu'**il se présente sous la forme de granulés.

16. Procédé de préparation d'un produit composite poreux selon l'une des revendications 1 à 15, **caractérisé en ce que** :
a) on forme un mélange homogène comprenant un ou plusieurs polymères insolubles, un ou plusieurs polymères solubles ou calcinables, une ou plusieurs charges, notamment à haute surface spécifique,
b) on extrude ledit mélange de façon à former un produit précurseur extrudé,
c) on élimine le ou les polymères solubles ou calcinables du produit précurseur extrudé pour former des pores,
d) on récupère le produit composite poreux.

17. Procédé de préparation selon la revendication 16, **caractérisé en ce que** l'élimination de l'étape c) est effectuée par mise en contact du produit précurseur extrudé avec un solvant approprié.

18. Procédé de préparation selon la revendication 17, **caractérisé en ce que** l'élimination de l'étape c) est effectuée en soumettant le produit précurseur extrudé à une calcination.

19. Procédé de préparation selon la revendication 16, **caractérisé en ce que** l'étape a) est effectuée au moyen d'un mélangeur ou d'une extrudeuse bivis assurant un mélange homogène des polymères et des charges, notamment à haute surface spécifique.

20. Procédé de préparation selon l'une des revendications 16 à 19, **caractérisé en ce que** le rapport en poids polymère insoluble/polymère soluble ou calcinable est compris entre 0,1 et 5.

21. Produit précurseur composite extrudé utile notamment pour la réalisation du procédé selon l'une des revendications 16 à 19, comprenant un ou plusieurs polymères insolubles, un autre ou des autres polymères solubles ou calcinables, et une ou plusieurs charges, notamment à haute surface spécifique.

22. Electrode pour ensemble électrochimique tel que générateur électrochimique ou accumulateur, **caractérisée en ce qu'**elle est formée d'un film de produit composite poreux selon la revendication 13 ou 14, de capacité électrochimique supérieure à 2 F/g, de préférence supérieure à 10 F/g et d'une matière électrochimiquement active.

23. Electrode pour supercondensateur ou condensateur, **caractérisée en ce qu'**elle est formée d'un film de produit composite poreux selon la revendication 13 ou 14, **caractérisée en ce que** la capacité électrochimique est supérieure à 2 F/g, de préférénce supérieure à 10 F/g.

24. Ensemble électrochimique notamment générateur électrochimique, condensateur ou supercondensateur comprenant deux électrodes selon la revendication 22 ou 23, et un séparateur imprégné d'un électrolyte.

25. Application des produits composites selon l'une des revendications 13 ou 14 pour le stockage électrochimique de l'énergie.

26. Application des produits composites selon l'une des revendications 13 ou 14 pour l'emballage, l'isolation.

27. Application des produits composites selon l'une des revendications 1 à 12, 15, pour la filtration sélective.

28. Application des produits composites selon l'une des revendications 13 ou 14 pour les procédés d'électrodialyse ou de déionisation capacitive.

29. Application des produits composites selon l'une des revendications 13 ou 14 pour le procédé d'électrolyse.

## Claims

1. Porous composite product having an homogeneous structure, **characterized in that** it is formed of a polymeric material and at least 20% of one or more fillers and **in that** the said product is capable of being obtained by extrusion.

2. Porous composite product according to Claim 1, **characterized in that** it exhibits a high specific surface.

3. Composite product according to Claim 1 or 2, **characterized in that** the mean diameter of the pores is less than 0.5 µm.

4. Composite product according to Claim 1, **characterized in that** the polymeric material comprises elastomers or polymers chosen from the group consisting of polyolefins, which are optionally fluorinated, acrylic polymers, aromatic polymers, polyamides, polyimides, vinyl polymers with a high proportion of ethyl monomers and optionally thermoplastic polymers or elastomers, soluble in polar organic solvents or water, which remain after the implementation of the manufacturing process.

5. Composite product according to Claim 4, **characterized in that** the polymeric material comprises elastomers or polymers chosen from the group consisting of polyethylenes, polypropylenes, ethylene-α-olefin copolymers and optionally thermoplastic polymers or elastomers, soluble in polar organic solvents or water, which remain after the implementation of the manufacturing process.

6. Composite product according to either of Claims 4 and 5, **characterized in that** the thermoplastic elastomers, soluble in polar organic solvents or water, which remain after the implementation of the manufacturing process are chosen from polyethers, poly(vinyl alcohol)s or ethylene-vinyl alcohol copolymers, preferably polyethers with a molecular mass of between 200,000 and 1,000,000.

7. Composite product according to Claim 6, **characterized in that** the composite product comprises:
- 10 to 40% of polyolefin,
- 5 to 40% of polyether,
- fillers, q.s. for 100%.

8. Composite product according to Claim 1, **characterized in that** the filler is chosen from fillers with a high specific surface, composed in particular of active charcoal, inorganic particles or metallic particles.

9. Composite product according to Claim 8, **characterized in that** the filler exhibits a specific surface of between 300 and 3000 m²/g.

10. Composite product according to one of the preceding claims, **characterized in that** it comprises between 30% and 90% by weight of filler.

11. Composite product according to Claim 10, **characterized in that** it comprises 50 to 85% by weight of filler.

12. Composite product according to one of the preceding claims, **characterized in that** it exhibits a "BET" specific surface of greater than 10 m²/g, preferably of greater than 20 m²/g.

13. Composite product according to one of the preceding claims, **characterized in that** it is provided in the form of a film.

14. Composite product according to Claim 13, **characterized in that** the product in the form of a film exhibits a tensile strength at break of greater than 4 MPa, preferably of greater than 6 MPa.

15. Composite product according to one of Claims 1 to 12, **characterized in that** it is provided in the form of granules.

16. Process for the preparation of a porous composite product according to one of Claims 1 to 15, **characterized in that**:
a) a homogeneous mixture comprising one or more insoluble polymers, one or more soluble or calcinable polymers and one or more fillers, in particular with a high specific surface, is formed,
b) the said mixture is extruded, so as to form an extruded precursor product,
c) the soluble or calcinable polymer or polymers is/are removed from the extruded precursor product, in order to form pores,
d) the porous composite product is recovered.

17. Preparation process according to Claim 16, **characterized in that** the removal of stage c) is carried out by bringing the extruded precursor product into contact with an appropriate solvent.

18. Preparation process according to Claim 17, **characterized in that** the removal of stage c) is carried out by subjecting the extruded precursor product to a calcination.

19. Preparation process according to Claim 16, **characterized in that** stage a) is carried out by means of a mixer or of a twin-screw extruder, ensuring homogeneous mixing of the polymers and of the fillers, in particular with a high specific surface.

20. Preparation process according to one of Claims 16 to 19, **characterized in that** the insoluble polymer/soluble or calcinable polymer ratio by weight is between 0.1 and 5.

21. Extruded composite precursor product of use in particular in carrying out the process according to one of Claims 16 to 19, comprising one or more insoluble polymers, one or more other soluble or calcinable polymers and one or more fillers, in particular with a high specific surface.

22. Electrode for an electrochemical assembly, such as an electrochemical generator or accumulator, **characterized in that** it is formed of a film of porous composite product according to Claim 13 or 14 with an electrochemical capacity of greater than 2 F/g, preferably of greater than 10 F/g, and of an electrochemically active material.

23. Electrode for a supercapacitor or capacitor, **characterized in that** it is formed of a film of porous composite product according to Claim 13 or 14 with an electrochemical capacity of greater than 2 F/g, preferably of greater than 10 F/g.

24. Electrochemical assembly, in particular an electrochemical generator, capacitor or supercapacitor comprising two electrodes according to Claim 22 or 23 and a separator impregnated with an electrolyte.

25. Application of the composite products according to either of Claims 13 and 14 for the electrochemical storage of energy.

26. Application of the composite products according to either of Claims 13 and 14 for packaging or insulation.

27. Application of the composite products according to one of Claims 1 to 12 and 15 for selective filtration.

28. Application of the composite products according to either of Claims 13 and 14 for electrodialysis or capacitive deionization processes.

29. Application of the composite products according to either of Claims 13 and 14 for the electrolysis process.

## Patentansprüche

1. Poröses Verbundprodukt mit homogener Struktur, **dadurch gekennzeichnet, daß** es aus einem polymeren Material und mindestens 20% eines oder mehrerer Zuschlagstoffe gebildet ist, und daß das Produkt durch Extrusion erhältlich ist.

2. Poröses Verbundprodukt nach Anspruch 1, **dadurch gekennzeichnet, daß** es eine erhöhte spezifische Oberfläche aufweist.

3. Verbundprodukt nach Anspruch 1 oder 2, **dadurch gekennzeichnet, daß** der mittlere Porendurchmesser kleiner als 0,5 µm ist.

4. Verbundprodukt nach Anspruch 1, **dadurch gekennzeichnet, daß** das polymere Material Elastomere oder Polymere umfaßt, die aus der Gruppe ausgewählt sind, die gebildet ist durch Polyolefine, gegebenenfalls fluoriert, Acrylpolymere, aromatische Polymere, Polyamide, Polyimide, Vinylpolymere mit großem Anteil von Ethylenmonomeren, und gegebenenfalls Polymere oder thermoplastische Elastomere, die in organischen polaren Lösungsmitteln oder Wasser löslich sind und nach der Durchführung des Herstellungsverfahrens noch vorhanden sind.

5. Verbundprodukt nach Anspruch 4, **dadurch gekennzeichnet, daß** das polymere Material die Elastomere oder Polymere umfaßt, die aus der Gruppe ausgewählt sind, die gebildet ist durch Polyethylene, Polypropylene, Ethylen-α-Olefin-Copolymere und gegebenenfalls Polymere oder thermoplastische Elastomere, die in den organischen polaren Lösungsmitteln oder Wasser löslich sind und nach der Durchführung des Herstellungsverfahrens noch vorhanden sind.

6. Verbundprodukt nach einem der Ansprüche 4 oder 5, **dadurch gekennzeichnet, daß** die thermoplastischen Elastomere, die in den organischen polaren Lösungsmitteln oder Wasser löslich sind und nach der Durchführung des Herstellungsverfahrens noch vorhanden sind, ausgewählt sind aus Polyethern, Polyvinylalkoholen, Vinylalkohol-Ethylen-Copolymeren, vorzugsweise Polyethern mit einem Molekulargewicht, das zwischen 200 000 und 1 000 000 liegt.

7. Verbundprodukt nach Anspruch 6, **dadurch gekennzeichnet, daß** das Verbundprodukt folgendes umfaßt:
- 10 bis 40% Polyolefin,
- 6 bis 40% Polyether,
- Zuschlagstoffe q.s.p. 100%.

8. Verbundprodukt gemäß Anspruch 1, **dadurch gekennzeichnet, daß** der Zuschlagstoff ausgewählt ist aus Zuschlagstoffen mit hoher spezifischer Oberfläche, insbesondere zusammengesetzt aus Aktivkohle, Mineralteilchen, Metallteilchen.

9. Verbundprodukt nach Anspruch 8, **dadurch gekennzeichnet, daß** der Zuschlagstoff eine spezifische Oberfläche aufweist, die zwischen 300 und 3000 m²/g liegt.

10. Verbundprodukt nach einem der vorhergehenden Ansprüche, **dadurch gekennzeichnet, daß** es zwischen 30 und 90 Gewichts-% Zuschlagstoff enthält.

11. Verbundprodukt nach Anspruch 10, **dadurch gekennzeichnet, daß** es 50 bis 85 Gewichts-% Zuschlagstoff enthält.

12. Verbundprodukt nach einem der vorhergehenden Ansprüche, **dadurch gekennzeichnet, daß** es eine spezifische "BET'-Oberfläche größer als 10 m²/g, vorzugsweise größer als 20 m²/g aufweist.

13. Verbundprodukt nach einem der vorhergehenden Ansprüche, **dadurch gekennzeichnet, daß** es in Form einer Folie vorliegt.

14. Verbundprodukt nach Anspruch 13, **dadurch gekennzeichnet, daß** das in Form einer Folie vorliegende Produkt eine Festigkeit gegen Zugbeanspruchung größer als 4 MPa, vorzugsweise größer als 6 MPa aufweist.

15. Verbundprodukt nach einem der Ansprüche 1 bis 12, **dadurch gekennzeichnet, daß** es in Form von Granulat vorliegt.

16. Verfahren zur Herstellung eines porösen Verbundprodukts gemäß einem der Ansprüche 1 bis 15, **dadurch gekennzeichnet, daß**:
a) man eine homogene Mischung bildet, umfassend ein oder mehrere unlösliche Polymere, ein oder mehrere lösliche oder calcinierbare Polymere, einen oder mehrere Zuschlagstoffe, insbesondere mit hoher spezifischer Oberfläche,
b) man die Mischung extrudiert, derart, daß man ein extrudiertes Zwischenprodukt bildet,
c) man das oder die löslichen oder calcinierbaren Polymere aus dem extrudierten Zwischenprodukt entfernt, um Poren zu bilden,
d) man das poröse Verbundprodukt erhält.

17. Herstellungsverfahren gemäß Anspruch 16, **dadurch gekennzeichnet, daß** das Entfernen im Schritt c) durchgeführt wird, indem das extrudierte Zwischenprodukt mit einem geeigneten Lösungsmittel in Kontakt gebracht wird.

18. Herstellungsverfahren nach Anspruch 17, **dadurch gekennzeichnet, daß** das Entfernen in Schritt c) durchgeführt wird, indem das extrudierte Zwischenprodukt einer Calcinierung unterzogen wird.

19. Herstellungsverfahren nach Anspruch 16, **dadurch gekennzeichnet, daß** der Schritt a) mit Hilfe eines Mischers oder eines Zweischneckenextruders durchgeführt wird, was eine homogene Mischung von Polymeren und Zuschlagstoffen, insbesondere mit hoher spezifischer Oberfläche, sicherstellt.

20. Herstellungsverfahren nach einem der Ansprüche 16 bis 19, **dadurch gekennzeichnet, daß** das Gewichtsverhältnis unlösliches Polymer/lösliches oder calcinierbares Polymer zwischen 0,1 und 5 liegt.

21. Extrudiertes Verbundzwischenprodukt, das insbesondere für die Durchführung des Verfahrens nach einem der Ansprüche 16 bis 19 verwendbar ist, umfassend ein oder mehrere unlösliche Polymere, ein weiteres oder weitere lösliche oder calcinierbare Polymere und einen oder mehrere Zuschlagstoffe, insbesondere mit hoher spezifischer Oberfläche.

22. Elektrode für eine elektrochemische Einheit, wie einen elektrochemischen Stromerzeuger oder einen Akkumulator, **dadurch gekennzeichnet, daß** sie aus einer Folie des porösen Verbundprodukts gemäß Anspruch 13 oder 14 gebildet ist, mit einer elektrochemischen Kapazität größer als 2 F/g, vorzugsweise größer als 10 F/g und aus einem elektrochemisch aktiven Material.

23. Elektrode für einen Superkondensator oder Kondensator, **dadurch gekennzeichnet, daß** sie aus einer Folie des porösen Verbundprodukts gemäß Anspruch 13 oder 14 gebildet ist, **dadurch gekennzeichnet, daß** die elektrochemische Kapazität größer als 2 F/g, vorzugsweise größer als 10 F/g ist.

24. Elektrochemische Einheit, insbesondere elektrochemischer Generator, Kondensator oder Superkondensator, umfassend zwei Elektroden gemäß Anspruch 22 oder 23 und einen mit einem Elektrolyt imprägnierten Separator.

25. Verwendung von Verbundprodukten gemäß einem der Ansprüche 13 oder 14 für die elektrochemische Speicherung von Energie.

26. Verwendung von Verbundprodukten gemäß einem der Ansprüche 13 oder 14 für die Verpackung, Isolierung.

27. Verwendung von Verbundprodukten gemäß einem der Ansprüche 1 bis 12, 15 für die selektive Filterung.

28. Verwendung von Verbundprodukten gemäß einem der Ansprüche 13 oder 14 für Elektrodialyse-Verfahren oder kapazitive Deionisierung.

29. Verwendung von Verbundprodukten gemäß einem der Ansprüche 13 oder 14 für Elektrolyseverfahren.
